# EUROPÄISCHE PATENTSCHRIFT

(11) **EP 2 812 619 B1**
(45) Veröffentlichungstag und Bekanntmachung des Hinweises auf die Patenterteilung: **28.06.2017**
(21) Anmeldenummer: 13712918.5
(22) Anmeldetag: 07.02.2013
(51) Int. Cl.: F16L 21/06

(54) **ROHRKUPPLUNG**
PIPE COUPLING
ACCOUPLEMENT TUBULAIRE

(30) Priorität: 10.02.2012 EP 12154836
(43) Veröffentlichungstag der Anmeldung: 17.12.2014
(73) Patentinhaber: Straub Werke AG, 7323 Wangs (CH)
(72) Erfinder: MANNHART, Hubert, CH-7320 Sargans (CH)
(74) Vertreter: Patentbüro Paul Rosenich AG
(86) Internationale Anmeldenummer: PCT/IB2013/051026
(87) Internationale Veröffentlichungsnummer: WO 2013/118079

(56) Entgegenhaltungen:
- EP-A1- 1 647 755
- EP-A2- 1 767 842
- DE-A1- 3 843 738
- US-A- 4 664 428
- US-A1- 2005 189 768

## Beschreibung

Die Erfindung betrifft eine Rohrkupplung nach dem Oberbegriff des Anspruchs 1.

Rohrkupplungen dienen dem Verbinden zweier einander zugewandten Rohrenden. Eine derartige Rohrkupplung wird auch als Rohrschelle oder Spannschelle bezeichnet. Um die Dichtigkeit der geschaffenen Verbindung sicherzustellen, werden beispielsweise Dichteinlagen vorgesehen, welche die beiden Rohrenden umfänglich umgeben und mittels des verspannten Schellenbandes in der gewünschten Position gehalten werden. Diese Dichteinlagen können ein Bestandteil der Rohrkupplung sein.

Aus der WO 2005/038152 A1 ist eine Rohrkupplung bekannt, die ein Schellenband umfasst, das um die Rohrenden herumlegbar ist und an seinen Enden nach radial aussen abragende Verbindungsabschnitte aufweist. Die Abbiegungen der Verbindungsabschnitte definieren einen Längsschlitz mit einer ersten Längsschlitzseite und einer dazu beabstandeten zweiten Längsschlitzseite. Als Spannmechanismus zur Reduktion des Innendurchmessers des Schellenbandes ist eine Schrauben-/Mutteranordnung vorgesehen, wobei die Schrauben durch Löcher in den Verbindungsabschnitten hindurchgeführt sind. Weiter ist ein separates Überbrückungselement zur Überbrückung des Längsschlitzes vorgesehen, dessen Dicke in Richtung der freien Enden abnimmt. Die abgeflachten Endbereiche dieses Überbrückungselementes dringen beim Verspannen der Rohrkupplung zwischen der Innenseite des Schellenbandes und der Dichteinlage ein, wobei die an der Innenseite des Schellenbandes anliegende Dichteinlage von dieser bereichsweise abgehoben wird.

Nachteilig an der vorgenannten Lösung ist, dass das als separates Bauteil ausgebildete Überbrückungselement ohne eine entsprechende Sicherungsmassnahme bei der Montage der Rohrkupplung verloren gehen kann und/oder das Handling dieser Rohrkupplung erschwert. Zudem erfordert dieses Überbrückungselement einen zusätzlichen Herstellungsaufwand und erhöht den Aufwand für das Zusammenbauen (Assembling) der Rohrkupplung. Solche Rohrkupplungen sind Massenprodukte, womit zusätzliche Aufwände einen massgeblichen Nachteil, insbesondere im Hinblick auf eine wirtschaftliche Fertigung darstellen. Weiter neigt aufgrund der Materialeigenschaften der Dichteinlage diese dazu, an der Innenseite des Schellenbandes zu haften, so dass auch mit einem solchen Überbrückungselement beim Verspannen der Rohrkupplung eine Beschädigung der Dichteinlage auftreten kann.

In einem Ausführungsbeispiel der US 4,664,428 A ist das Überbrückungselement durch das freie Ende des Schellenbandes gebildet. An dem freien Ende des Schellenbandes ist ein elastisches Dichtelement vorgesehen. Eine vergleichbare Rohrkupplung ist in der DE 38 43 738 A1 gezeigt.

Nachteilig an den vorgenannten Lösungen ist, dass das an dem Überbrückungselement angeordnete elastische Dichtelement bei einer Rohrkupplung, welche eine flächige Dichteinlage umgreift, diese Dichteinlage beim Verspannen der Rohrkupplung derart falten beziehungsweise verschieben kann, dass eine Dichtigkeit nicht mehr in jedem Fall gewährleistet ist.

In einer alternativen Ausführungsform, welche ebenfalls in der US 4,664,428 A gezeigt ist, sind beabstandet zu den Längsschlitzseiten innenseitig des Schellenbandes separate Dichtelemente vorgesehen, welche sich beabstandet zu den entsprechenden Seitenrändern des Schellenbandes über einen grossen Teil der Schellenbandbreite erstrecken. Zur Überbrückung des Längsschlitzes ist ein separates Überbrückungselement vorgesehen, welches sich im verspannten Zustand der Rohrkupplung von einer der innenseitig angeordneten Dichtelemente zum anderen Dichtelement erstreckt.

Nachteilig an der vorgenannten Lösung ist, dass das Überbrückungselement als separates Bauteil ausgebildet ist und somit im Wesentlichen die gleichen Nachteile wie das in der WO 2005/038152 A1 beschriebene Überbrückungselement aufweist. In der US 4,365,393 A wird vorgeschlagen, im Bereich der Laschen, welche die Spannbolzen des Spannmechanismus aufnehmen, nach radial innen offene Vertiefungen auszubilden, in denen im verspannten Zustand der Rohrkupplung ein Überbrückungselement ausserhalb der innenseitig des Schellenbandes angeordneten, flächigen Dichteinlage zu liegen kommt.

Nachteilig an der vorgenannten Lösung ist, dass neben dem herstellungstechnischen Mehraufwand zur Fertigung der Vertiefungen auch hier das Überbrückungselement als separates Bauteil ausgebildet ist und daher ebenfalls die in diesem Zusammenhang vorgenannten Nachteile aufweist.

In der EP 1 767 842 A2 wird vorgeschlagen, bei einer Rohrkupplung zum Verbinden zweier Rohrenden ein mehrsegmentiges Gehäuse über einen elastischen, umfänglich geschlossenen Ring, der als Dichteinlage dient, zusammenzuhalten. Das Gehäuse wird über ein separates aussenliegendes Schellenband verspannt. An der Aussenseite der Gehäusesegmente sind mehrere Vorsprünge vorgesehen, zwischen denen das Schellenband geführt ist. Das Schellenband ist frei um das Gehäuse rotierbar. Im vollständig verspannten Zustand der Kupplung reihen sich alle Gehäusesegmente aneinander und bilden einen geschlossenen Ring aus.

Nachteilig an der vorgenannten Lösung ist, dass die Rohrkupplung aus mehreren separaten Bauteilen besteht. Zudem müssen die zu verbindenden Rohrenden in den elastischen Ring eingefädelt werden, was insbesondere bei beschränkten Platzverhältnissen während einer Montage der Rohrkupplung schwierig bis gar unmöglich ist. Da die Gehäusesegmente zusätzlich zum Schellenband über den gesamten Umfang verlaufen, wird zu der Herstellung dieser Kupplung eine grosse Menge an Material benötigt. Dies erhöht die Herstellungskosten, was bei einem Massenprodukt, wie es eine solche Rohrkupplung darstellt, ein wesentlicher Nachteil ist.

Aus der US 2005/0189768 A1 ist eine Rohrkupplung bekannt, welche neben einem aussenliegenden Schellenband eine geschlitzte, über den gesamten Umfang verlaufende Innenhülse aufweist. An den miteinander in Anlage kommenden freien Enden der Innenhülse sind Verriegelungsabschnitte vorgesehen. Am Schellenband wie auch an der Innenhülse sind miteinander in Überlappung bringbare Öffnungen vorgesehen, welche Bolzenabschnitt aufnehmen, die im Bereich der Rohrenden an den Rohren vorgesehen sind.

Nachteilig an der vorgenannten Lösung ist, dass die als separates Bauteil ausgebildete Innenhülse sich über den gesamten Umfang erstreckt und somit die Rohrkupplung im Wesentlichen die gleichen Nachteile wie die in der EP 1 767 842 A2 beschriebene Rohrkupplung aufweist.

Aus der EP 1 647 755 A1 ist eine Profilschelle als Rohrkupplung zum Verbinden zweier Rohrenden gezeigt, welche jeweils mit einem nach aussen abragenden Rohrflansch versehen sind. Diese Profilschelle umfasst ein Schellenband, das einen Längsschlitz mit einer ersten Längsschlitzseite) und einer dazu beabstandeten zweiten Längsschlitzseite aufweist, und ein Spannmechanismus zur Reduktion des Innendurchmessers des Schellenbandes. An dem Schellenband sind mehrere hintereinander in Umfangsrichtung des Schellenbandes erstreckende Profilsegmente vorgesehen, welche im Querschnitt trogförmig zur Aufnahme der Rohrflansche ausgebildet sind. In jeder Lücke zwischen den einzelnen Profilsegmenten sind federnde, im Abstand vom Schellenband verlaufende Metallstreifen vorgesehen, um beim Verspannen der Profilschelle die anfänglich exzentrischen Rohre mit ihren Rohrflanschen selbstständig zu zentrieren. Nachteilig an der vorgenannten Lösung ist, dass die Rohrkupplung aus mehreren materialintensiven Bauteilen besteht und nur für die Verbindung von Rohrenden ausgebildet ist, welche entsprechend mit einem Flansch ausgebildet sind.

Aufgabe der vorliegenden Erfindung ist es somit, eine Rohrkupplung zu schaffen, die die vorgenannten Nachteile nicht aufweist und insbesondere einfach herstellbar und montagefreundlich ist. Dabei soll eine Beschädigung einer innerhalb der Rohrkupplung zu liegen kommenden Dichteinlage beim Verspannen der Rohrkupplung vermieden werden und eine ausreichende Dichtigkeit der geschaffenen Rohrverbindung sichergestellt sein.

Die Aufgabe wird durch die Merkmale des unabhängigen Anspruchs gelöst. Vorteilhafte Weiterbildungen sind in den Figuren und in den abhängigen Patentansprüchen dargelegt.

Gemäss der Erfindung ist zumindest ein in einem Bogenabschnitt verlaufendes Distanzelement an der Innenseite des Schellenbandes formschlüssig festgelegt, wobei die der zweiten Längsschlitzseite zugewandte Kante des Distanzelementes in einem Abstand zu dieser zweiten Längsschlitzseite angeordnet ist und diese Kante des Distanzelementes einen Anschlag für ein freies Ende des Überbrückungselementes bildet.

Das an dem Schellenband vorgesehene Überbrückungselement ist entweder als separates, jedoch am Schellenband festgelegtes Bauteil ausgebildet oder wird von dem entsprechenden Ende des Schellenbandes selbst ausgebildet. Somit ist das Überbrückungselement unverlierbar an dem Schellenband angeordnet und behindert die Montage der Rohrkupplung in keinster Weise.

Das zumindest eine Distanzelement ist vorteilhaft ein separates Element. Alternativ wird das zumindest eine Distanzelement durch eine Erhebung beziehungsweise Ausbuchtung des Schellenbandes gebildet, welche von der Innenseite des Schellenbandes abragt.

Das zumindest eine Distanzelement stellt in Richtung der zweiten Längsschlitzseite einen Freiraum zwischen der Dichteinlage und der Innenseite des Schellenbandes für das freie Ende des Überbrückungselementes zur Verfügung, in welchen dieses Ende beim Verspannen der Rohrkupplung eindringen kann. Dabei wird sichergestellt, dass das freie Ende des Überbrückungselementes ausserhalb der Aussenseite der Dichteinlage zu liegen kommt und diese nicht in ungewünschter Art und Weise verschiebt oder gar beschädigt. Insbesondere bei Rohrkupplungen mit einem grossen Innendurchmesser kann die Anordnung von mehreren, vorteilhaft beabstandet zueinander angeordneten Distanzelementen an einem Schellenband für eine vorteilhafte Ausrichtung einer in der Rohrkupplung zu liegen kommenden Dichteinlage vorteilhaft sein.

Diese Rohrkupplung ist unabhängig von der Art der verwendeten Dichteinlage, so dass diese bedarfsweise entsprechend den erforderlichen Randbedingungen ausgewählt und angeordnet werden kann.

In einer sekundären Funktion dient das zumindest eine Distanzelement als Anschlag für das freie Ende des Überbrückungselementes und verhindert so eine übermässige Verspannung der Rohrkupplung bei der Montage. Diese Anschlagsfunktion ist insbesondere bei Kunststoffrohren vorteilhaft, bei denen eine zu grosse Verspannung der Rohrkupplung zu unerwünschten Verformungen derselben in deren Endbereich führen könnte.

Da das zumindest eine Distanzelement formschlüssig an der Innenseite des Schellenbandes festgelegt ist, ist dieses sicher an dem Schellenband in der gewünschten Position gehalten. Beispielsweise wird das zumindest eine Distanzelement mittels eines Klebers oder einer Lötung beziehungsweise Schweissung an der Innenseite des Schellenbandes befestigt. In einer weiteren alternativen Ausführungsform wird das zumindest eine Distanzelement mit einem Verbindungsmittel, z. B. zumindest einem Niet oder Clip, an der Innenseite des Schellenbandes festgelegt.

Vorzugsweise ist das zumindest eine Distanzelement aus einem steifen Material, wie beispielsweise aus einem Blech oder einem Kunststoff, gefertigt, womit eine ausreichende Grösse des gewünschten Freiraums für das freie Ende des Überbrückungselementes gewährleistet bleibt und zwar im Wesentlichen unter allen Arten von Belastungen auf das zumindest eine Distanzelement.

Bevorzugt erstreckt sich das zumindest eine Distanzelement über die gesamte Breite des Schellenbandes, womit eine ausreichende Grösse des gewünschten Freiraums für das freie Ende des Überbrückungselementes nicht nur in Umfangsrichtung des Schellenbandes sondern auch quer dazu gewährleistet ist.

Vorzugsweise weist das zumindest eine Distanzelement eine Dicke auf, die der Dicke des Überbrückungselementes entspricht. Auch diese Massnahme stellt eine ausreichende Grösse des gewünschten Freiraums für das freie Ende des Überbrückungselementes sicher.

In einer alternativen Ausführungsform weist das Distanzelement eine Dicke auf, die unterschiedlich zu der Dicke des Überbrückungselementes ist. Vorzugsweise entspricht die Dicke des Distanzelementes zur Schaffung eines ausreichend grossen Freiraums für das freie Ende des Überbrückungselementes jedoch zumindest der Dicke des Überbrückungselementes.

Bevorzugt erstreckt sich der Abstand der der zweiten Längsschlitzseite zugewandten Kante des zumindest einen Distanzelementes über einen Winkelbereich von 20° bis 40° und vorzugsweise von 25° bis 35°, womit ein ausreichend grosser Freiraum zur Aufnahme des freien Endes des Überbrückungselementes vorhanden ist.

Bevorzugt ist ein Übergangsbereich des freien Endes des Überbrückungselementes zu diesem freien Ende hin verjüngend ausgebildet, womit ein in den geschaffenen Freiraum eindringender Abschnitt des Dichtelementes oder der Rohrwandung beim Verspannen der Rohrkupplung diesen Vorgang nicht behindert.

Vorzugsweise ist zumindest eine Erhebung an der Innenseite des Überbrückungselementes vorgesehen, welche vorteilhaft bereits im unverspannten Zustand der Rohrkupplung nach dem Anordnen der Rohrkupplung an den Rohrenden an der Aussenseite des Dichtelementes beziehungsweise der Rohraussenwandung anliegt. Dadurch wird die Kontaktfläche und somit die Reibungsfläche zwischen dem Überbrückungselement und der Aussenseite des Dichtelementes beziehungsweise der Rohraussenwandung reduziert, womit die Rohrkupplung einfacher verspannbar ist.

Bevorzugt sind mehrere Erhebungen an der Innenseite des Überbrückungselementes vorgesehen, womit eine gleichmässigere Beabstandung des flächigen Abschnitts des Überbrückungselementes und somit eine die Verspannung behindernde oder zumindest diese beeinflussende grossflächige Auflage des Überbrückungselementes verhindert wird.

Vorzugsweise verlaufen die zumindest eine Erhebung beziehungsweise die mehreren Erhebungen entlang des Bogenabschnitts, welche beim Verspannen der Rohrkupplung entlang der Aussenseite des Dichtelementes beziehungsweise der Rohraussenwandung gleiten. Insbesondere bei dieser Ausgestaltung der zumindest einen Erhebung beziehungsweise der mehreren Erhebungen weist ein dem freien Ende des Überbrückungselementes zugewandte Seite der entsprechenden Erhebung eine abgeschrägte oder rampenförmige Ausgestaltung auf.

Bevorzugt weist die zumindest eine Erhebung beziehungsweise die mehreren Erhebungen in Richtung des Bogenabschnitts jeweils eine Erstreckung auf, die grösser als 50% der Erstreckung in Richtung des Bogenabschnitts des Überbrückungselementes ist. Eine Rohrkupplung der vorliegenden Art wird für verschiedene Rohrdurchmesser verwendet. Mit der vorgenannten vorteilhaften Ausführungsform wird gewährleistet, dass auch bei der Verwendung der Rohrkupplung bei Rohrdurchmessern im grösseren Bereich, eine begrenzte Auflage des Überbrückungselementes an der Aussenseite des Dichtelementes beziehungsweise der Rohraussenwandung und somit ein einfaches Verspannen der Rohrkupplung gewährleistet ist.

Vorzugsweise verlaufen bei einem Überbrückungselement mit mehreren Erhebungen diese parallel zueinander, womit eine solche Rohrkupplung einfach verspannbar ist. Insbesondere bei Erhebungen, welche in Richtung des Bogenabschnitts verlaufen, ist eine parallele Anordnung vorteilhaft, da dadurch beispielsweise ein das Verspannen der Rohrkupplung behinderndes Verquetschen von Material des Dichtelementes oder der Rohraussenwandung verhindert wird.

Bevorzugt ist die zumindest eine Erhebung beziehungsweise sind die mehreren Erhebungen beabstandet zu zumindest einem der Ränder des Überbrückungselementes angeordnet, vorteilhaft zu mehreren Rändern des Überbrückungselementes und besonders vorteilhaft zu allen Rändern des Überbrückungselementes beabstandet.

Vorzugsweise ist die zumindest eine Erhebung beziehungsweise sind die mehreren Erhebungen als Sicke ausgebildet, deren Sickenrücken von der Innenseite des Überbrückungselementes beabstandet und dem Innenraum der Rohrkupplung zugewandt ist. Dadurch ist das Überbrückungselement und somit die gesamte Rohrkupplung einfach und kostengünstig herstellbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile.

Es zeigen dabei:
- Fig. 1: Eine erfindungsgemässe Rohrkupplung im montierten Zustand in einer Seitenansicht,
- Fig. 2: die Rohrkupplung gemäss Figur 1 in einer perspektivischen Darstellung,
- Fig. 3: eine Variante einer erfindungsgemässe Rohrkupplung im montierten Zustand in einer Seitenansicht, und
- Fig. 4: die Rohrkupplung gemäss Figur 3 in einer perspektivischen Darstellung.

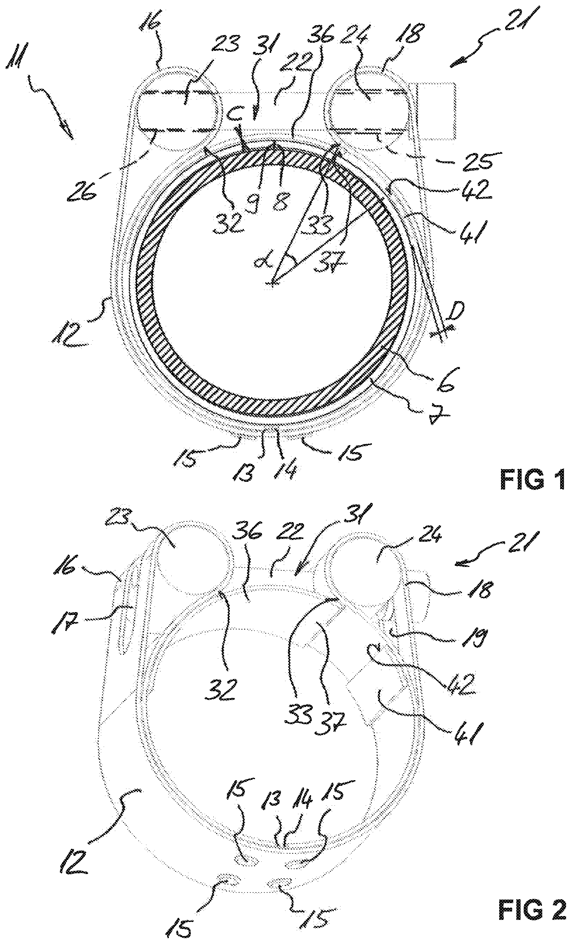

Die Figuren 1 und 2 zeigen eine Rohrkupplung 11 zum Verbinden zweier Rohrenden. Die Rohrkupplung 11 umfasst ein Schellenband 12, das aus einem Blechstreifen gefertigt ist. Die freien Enden 13 und 14 des Schellenbandes 12 sind direkt benachbart zueinander in einem mittleren Bereich des Schellenbandes 12 an diesem jeweils mit zwei Nieten 15 festgelegt. Das Schellenband 12 ist somit doppellagig geführt, wobei etwa entlang eines halbkreisförmigen Bereichs die entsprechenden Abschnitte des Schellenbandes 12 direkt aneinander liegen. Alternativ können die freien Enden 13 und 14 des Schellenbandes 12 auch beabstandet zueinander sein, wobei dann in dem Bereich zwischen diesen freien Enden 13 und 14 das Schellenband 12 nur einlagig wäre.

In den umgebogenen Bereichen des Schellenbandes 12 sind Laschen 16 bzw. 18 ausgebildet, welche jeweils einen Spannbolzen 23 bzw. 24 aufnehmen. Die Lasche 16 weist einen in Längserstreckung des Schellenbandes 12 verlaufenden Schlitz 17 auf. Die Lasche 18 weist einen in Längserstreckung des Schellenbandes 12 verlaufenden Schlitz 19 auf. In dem Spannbolzen 24 ist eine Durchführöffnung 25 für eine Spannschraube 22 und im Spannbolzen 23 ist eine Innengewindebohrung 26 für die Spannschraube 22 vorgesehen. Die Spannschraube 22 durchdringt die Schlitze 17 und 19 in den Laschen 16 bzw. 18. Die Spannschraube 22 sowie die Spannbolzen 23 und 24 bilden zusammen den Spannmechanismus 21 zur Reduktion des Innendurchmessers des Schellenbandes 12.

Zwischen den Laschen 16 und 18 ist ein Längsschlitz 31 ausgebildet. Der Längsschlitz 31 weist eine erste Längsschlitzseite 32, welche in diesem Ausführungsbeispiel durch die von dem nach aussen abgebogenen Abschnitt der Lasche 16 ausgebildete Kante bestimmt ist. Der Längsschlitz 31 weist weiter eine zu der ersten Längsschlitzseite 32 beabstandete zweite Längsschlitzseite 33 auf, welche in diesem Ausführungsbeispiel durch die von dem nach aussen abgebogenen Abschnitt der Lasche 18 ausgebildete Kante bestimmt ist.

Weiter ist innenseitig des Schellenbandes 12 ein Überbrückungselement 36 zur Überbrückung des Längsschlitzes 31 festgelegt, z. B. angelötet oder angeschweisst. Das Überbrückungselement 36 erstreckt sich über einen Bogenabschnitt ausgehend von der ersten Längsschlitzseite 32 in beide Umfangsrichtungen und somit auch in Richtung der zweiten Längsschlitzseite 33. Die Länge des Bogenabschnitt ist kleiner als der Innenumfang des Schellenbandes 12. Das Überbrückungselement 36 weist ein freies Ende 37 auf, das in Richtung der zweiten Längsschlitzseite 33 ausgerichtet ist.

An der Innenseite des Schellenbandes 12 ist zudem ein formschlüssig an der Innenseite des Schellenbandes 12 festgelegtes, in einem Bogenabschnitt verlaufendes Distanzelement 41 vorgesehen, wobei die der zweiten Längsschlitzseite 33 zugewandte Kante 42 des Distanzelementes 41 in einem Abstand zu dieser zweiten Längsschlitzseite 33 angeordnet ist. Diese Kante 42 des Distanzelementes 41 bildet einen Anschlag für das freie Ende 37 des Überbrückungselementes 36. Das Distanzelement 41 ist aus einem steifen Material gefertigt und erstreckt sich über die gesamte Breite des Schellenbandes 12. Das Distanzelement 41 weist eine Dicke D auf, die der Dicke C des Überbrückungselementes 36 entspricht. In einer Alternative kann die Dicke D des Distanzelementes 41 unterschiedlich zur Dicke C des Überbrückungselementes 36 sein, wobei vorteilhaft die Dicke D des Distanzelementes 41 grösser als die Dicke C des Überbrückungselementes 36 ist. Der Abstand der Kante 42 des Distanzelementes 41, die der zweiten Längsschlitzseite 33 zugewandt ist, erstreckt sich über einen Winkelbereich α von 20° bis 40°, vorzugsweise von 25° bis 35°.

Die mit der Rohrschelle zu verbindenden Rohre (in Figur 1 ist nur das Rohr 6 dargestellt) werden zueinander ausgerichtet. Um die Stossstelle der Rohrenden wird eine flächige Dichteinlage 7 gelegt. Die Dichteinlage 7 ist in ihren Abmessungen vorteilhaft derart ausgestaltet, dass deren freie Enden 8 bzw. 9 im verspannten Zustand der Rohrkupplung 11 dicht aneinander liegen. Dann wird die Rohrkupplung 11 mit geöffneten Spannmechanismus 21 um die Stossstelle der Rohrenden gelegt, wozu die Laschen 16 und 18 auseinandergezogen werden. Nachdem das Schellenband 12 entsprechend ausgerichtet ist, wird die Spannschraube 22 durch die Durchführöffnung 25 im Spannbolzen 23 hindurchgeführt und in die Gewindebohrung im Spannbolzen 23 eingeschraubt. Durch weiteres Einschrauben der Spannschraube 22 wird die Rohrkupplung verspannt, wobei der Innendurchmessers des Schellenbandes 12 reduziert wird. Das freie Ende 37 des Überbrückungselementes 36 dringt in den von dem Distanzelement 41 geschaffenen, zwischen der zweiten Längsschlitzseite 33 und der Kante 42 des Distanzelementes 41 vorhandenen Freiraum ein, ohne dass die Dichteinlage 7 dadurch beschädigt oder verschoben wird.

In einer Variante ist die Dichteinlage 7 ein Bestandteil der Rohrkupplung 11, so dass beim Anordnen der Rohrkupplung 11 gleichzeitig die Dichteinlage 7 montiert wird.

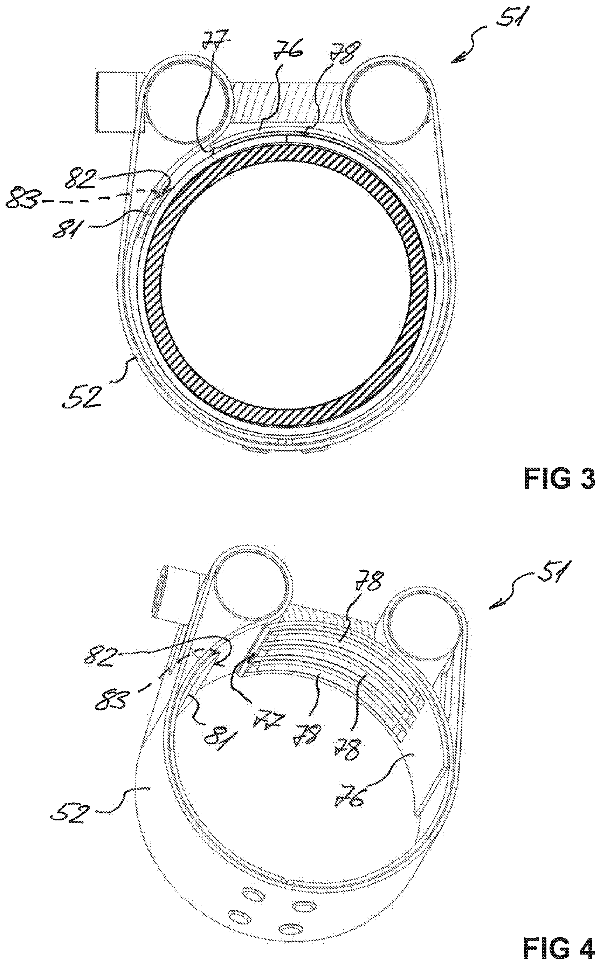

Die Figuren 3 und 4 zeigen eine weitere erfindungsgemässe Ausführungsform einer Rohrkupplung 51 zum Verbinden zweier Rohrenden. Die Rohrkupplung 51 ist bis auf die Ausgestaltung des Überbrückungselementes 76 im Wesentlichen wie die zuvor beschriebene Rohrkupplung 11 ausgebildet. Es wird daher in diesem Zusammenhang auf die vorgenannten Ausführungen verwiesen.

Das innenseitig des Schellenbandes 52 festgelegte Überbrückungselement 76 zur Überbrückung des Längsschlitzes weist ein freies Ende 77 auf, das in Richtung der zweiten Längsschlitzseite 33 ausgerichtet ist. Der Übergangsbereich beim freien Endes 77 des Überbrückungselementes 76 ist zu diesem freien Ende hin verjüngend ausgebildet.

An der Innenseite des Überbrückungselementes 76 sind mehrere, hier beispielhaft drei Erhebungen 78 vorgesehen. Die Erhebungen 78 verlaufen entlang des Bogenabschnitts und parallel zueinander. Die Erhebungen 78 weisen jeweils eine Erstreckung in Richtung des Bogenabschnitts des Überbrückungselementes 76 auf, die grösser als 50% der Erstreckung in Richtung des Bogenabschnitts des Überbrückungselementes 76 ist. Die beiden äusseren Erhebungen 78 sind jeweils beabstandet zu den Seitenrändern des Überbrückungselementes 76 und alle drei Erhebungen 78 sind auch beabstandet zum freien Ende 77 des Überbrückungselementes 76 angeordnet. Die Erhebungen 78 sind jeweils als Sicken ausgebildet. Deren Sickenrücken ist jeweils von der Innenseite des Überbrückungselementes 76 beabstandet und dem Innenraum der Rohrkupplung 51 zugewandt.

Die der zweiten Längsschlitzseite zugewandte Kante 82 des Distanzelementes 81 bildet einen Anschlag für das freie Ende 77 des Überbrückungselementes 76. An der Kante 82 des Distanzelementes 81 kann eine Ausnehmung 83 (gestrichelt dargestellt) zur Aufnahme des freien Endes 77 des Überbrückungselementes 76 vorgesehen sein.

**Bezugszeichenliste**

| | | | |
|---|---|---|---|
| 6 | Rohr | C | Dicke v. 36 |
| 7 | Dichteinlage | D | Dicke v. 41 |
| 8 | freies Ende v. 7 | | |
| 9 | freies Ende v. 7 | α | Winkelbereich |
| | | | |
| 11 | Rohrkupplung | | |
| 12 | Schellenband | | |
| 13 | freies Ende v. 12 | 51 | Rohrkupplung |
| 14 | freies Ende v. 12 | 52 | Schellenband |
| 15 | Niet | | |
| 16 | Lasche | 76 | Überbrückungselement |
| 17 | Schlitz v. 16 | 77 | freies Ende v. 76 |
| 18 | Lasche | 78 | Erhebung an 76 |
| 19 | Schlitz v. 18 | | |
| | | 81 | Distanzelement |
| 21 | Spannmechanismus | 82 | Kante v. 81 |
| 22 | Spannschraube | 83 | Ausnehmung bei 82 |
| 23 | Spannbolzen | | |
| 24 | Spannbolzen | | |
| 25 | Durchführöffnung in 24 | | |
| 26 | Gewindebohrung in 23 | | |
| | | | |
| 31 | Längsschlitz | | |
| 32 | 1. Längsschlitzseite | | |
| 33 | 2. Längsschlitzseite | | |
| | | | |
| 36 | Überbrückungselement | | |
| 37 | freies Ende v. 36 | | |
| | | | |
| 41 | Distanzelement | | |
| 42 | Kante v. 41 | | |

## Patentansprüche

1. Rohrkupplung zum Verbinden zweier Rohrenden umfassend ein Schellenband (12; 52), das einen Längsschlitz (31) mit einer ersten Längsschlitzseite (32) und einer dazu beabstandeten zweiten Längsschlitzseite (33) aufweist, und ein Spannmechanismus (21) zur Reduktion des Innendurchmessers des Schellenbandes (12) sowie ein Überbrückungselement (36; 76) zur Überbrückung des Längsschlitzes (31), das an der Innenseite des Schellenbandes (12; 52) vorgesehen ist und sich von der ersten Längsschlitzseite (32) in Richtung der zweiten Längsschlitzseite (33) über einen Bogenabschnitt erstreckt, wobei die Länge des Bogenabschnitts kleiner als der Innenumfang des Schellenbandes (12; 52) ist, **dadurch gekennzeichnet, dass** das Überbrückungselement (36; 76) an dem Schellenband (12; 52) und zumindest ein in einem Bogenabschnitt verlaufendes Distanzelement (41; 81) an der Innenseite des Schellenbandes (12) festgelegt sind, wobei die der zweiten Längsschlitzseite (33) zugewandte Kante (42; 82) des Distanzelementes (41; 81) in einem Abstand zu dieser zweiten Längsschlitzseite (33) angeordnet ist und diese Kante (42; 82) des Distanzelementes (41; 81) einen Anschlag für ein freies Ende (37; 77) des Überbrückungselementes (36; 76) bildet.

2. Rohrkupplung nach Anspruch 1, **dadurch gekennzeichnet, dass** das zumindest eine Distanzelement (41; 81) aus einem steifen Material gefertigt ist.

3. Rohrkupplung nach Anspruch 1 oder 2, **dadurch gekennzeichnet, dass** das zumindest eine Distanzelement (41; 81) sich über die gesamte Breite des Schellenbandes (12; 52) erstreckt.

4. Rohrkupplung nach einem der Ansprüche 1 bis 3, **dadurch gekennzeichnet, dass** das zumindest eine Distanzelement (41; 81) eine Dicke (D) aufweist, die der Dicke (C) des Überbrückungselementes (36; 76) entspricht oder unterschiedlich zu der Dicke des Überbrückungselementes ist, wobei vorzugsweise die Dicke (D) des Distanzelementes (41; 81) zumindest der Dicke (C) des Überbrückungselementes (36; 76) entspricht.

5. Rohrkupplung nach einem der Ansprüche 1 bis 4, **dadurch gekennzeichnet, dass** der Abstand der der zweiten Längsschlitzseite (33) zugewandten Kante (42; 82) des zumindest einen Distanzelementes (41; 81) sich über einen Winkelbereich (α) von 20° bis 40°, vorzugsweise von 25° bis 35° erstreckt.

6. Rohrkupplung nach einem der Ansprüche 1 bis 5, **dadurch gekennzeichnet, dass** das zumindest eine Distanzelement (41; 81) formschlüssig an der Innenseite des Schellenbandes (12; 52) festgelegt ist.

7. Rohrkupplung nach einem der Ansprüche 1 bis 6, **dadurch gekennzeichnet, dass** das Distanzelement (81) an seiner der zweiten Längsschlitzseite zugewandte Kante (82) eine Ausnehmung (83) zur Aufnahme des freien Endes (77) des Überbrückungselementes (76) aufweist.

8. Rohrkupplung nach einem der Ansprüche 1 bis 7, **dadurch gekennzeichnet, dass** ein Übergangsbereich beim freien Ende (77) des Überbrückungselementes (76) zu diesem freien Ende (77) hin verjüngend ausgebildet ist.

9. Rohrkupplung nach einem der Ansprüche 1 bis 8, **dadurch gekennzeichnet, dass** zumindest eine Erhebung (78) an der Innenseite des Überbrückungselementes (76) vorgesehen ist.

10. Rohrkupplung nach Anspruch 9, **dadurch gekennzeichnet, dass** mehrere Erhebungen (78) an der Innenseite des Überbrückungselementes (76) vorgesehen sind.

11. Rohrkupplung nach Anspruch 9 oder 10, **dadurch gekennzeichnet, dass** die zumindest eine Erhebung (78) bzw. die mehreren Erhebungen (78) entlang des Bogenabschnitts verlaufen.

12. Rohrkupplung nach Anspruch 11, **dadurch gekennzeichnet, dass** die zumindest eine Erhebung (78) bzw. die mehreren Erhebungen (78) jeweils eine Erstreckung in Richtung des Bogenabschnitts des Überbrückungselementes (76) aufweisen, die grösser als 50% der Erstreckung in Richtung des Bogenabschnitts des Überbrückungselementes (76) ist.

13. Rohrkupplung nach einem der Ansprüche 10 bis 12, **dadurch gekennzeichnet, dass** die mehreren Erhebungen (78) parallel zueinander verlaufen.

14. Rohrkupplung nach einem der Ansprüche 9 bis 13, **dadurch gekennzeichnet, dass** die zumindest eine Erhebung (78) bzw. die mehreren Erhebungen (78) beabstandet zu zumindest einem der Ränder des Überbrückungselementes (76) angeordnet ist bzw. sind.

15. Rohrkupplung nach einem der Ansprüche 9 bis 14, **dadurch gekennzeichnet, dass** die zumindest eine Erhebung (78) bzw. die mehreren Erhebungen (78) als Sicke ausgebildet sind, deren Sickenrücken von der Innenseite des Überbrückungselementes (76) beabstandet und dem Innenraum der Rohrkupplung (51) zugewandt ist.

## Claims

1. A pipe coupling for connecting two pipe ends comprising a clip band (12; 52) which has a longitudinal slot (31) with a first longitudinal slot side (32) and a second longitudinal slot side (33) spaced apart therefrom and a clamping mechanism (21) for reducing the inner diameter of the clip band (12) and also a bridging element (36; 76) for bridging the longitudinal slot (31) which is provided on the inside of the clip band (12; 52) and extends from the first longitudinal slot side (32) in the direction of the second longitudinal slot side (33) over an arc section, wherein the length of the arc section is smaller than the inner circumference of the clip band (12; 52), **characterized in that** the bridging element (36; 76) on the clip band (12; 52) and at least one spacer element (41; 81) extending in an arc section are fixed to the inside of the clip band (12), wherein the edge (42; 82) of the spacer element (41; 81) facing the second longitudinal slot side (33) is arranged at a distance from this second longitudinal slot side (33) and this edge (42; 82) of the spacer element (41; 81) forms a stop for a free end (37; 77) of the bridging element (36; 76).

2. The pipe coupling according to claim 1, **characterized in that** the at least one spacer element (41; 81) is made of a rigid material.

3. The pipe coupling according to claim 1 or 2, **characterized in that** the at least one spacer element (41; 81), extends over the entire width of the clip band (52; 12).

4. The pipe coupling according to one of claims 1 to 3, **characterized in that** the at least one spacer element (41; 81) has a thickness (D) which corresponds to the thickness (C) of the bridging element (36; 76) or is different from the thickness of the bridging element, wherein the thickness (D) of the spacer element (41; 81) preferably at least corresponds to the thickness (C) of the bridging element (36; 76).

5. The pipe coupling according to one of claims 1 to 4, **characterized in that** the distance of the edge (42; 82) of the at least one spacer element (41; 81) facing the second longitudinal slot side (33) extends over an angular range (α) from 20° to 40°, preferably from 25° to 35°.

6. The pipe coupling according to one of claims 1 to 5, **characterized in that** the at least one spacer element (41; 81) is form-fitted on the inside of the clip band (12; 52).

7. The pipe coupling according to one of claims 1 to 6, **characterized in that** the spacer element (81) has a recess (83) for receiving the free end (77) of the bridging element (76) on its edge (82) facing the second longitudinal slot side edge (82).

8. The pipe coupling according to one of claims 1 to 7, **characterized in that** a transitional region at the free end (77) of the bridging element (76) is configured to taper towards this free end (77).

9. The pipe coupling according to one of claims 1 to 8, **characterized in that** at least one elevation (78) is provided on the inside of the bridging element (76).

10. The pipe coupling according to claim 9, **characterized in that** a plurality of elevations (78) is provided on the inside of the bridging element (76).

11. The pipe coupling according to claim 9 or 10, **characterized in that** the at least one elevation (78) or the plurality of elevations (78) extend along the arc section.

12. The pipe coupling according to claim 11, **characterized in that** the at least one elevation (78) or the plurality of elevations (78) each have an extension in the direction of the arc section of the bridging element (76) which is greater than 50 % of the extent in the direction of the arc section of the bridging element (76).

13. The pipe coupling according to one of claims 10 to 12, **characterized in that** the plurality of elevations (78) extend parallel to each other.

14. The pipe coupling according to one of claims 9 to 13, **characterized in that** the at least one elevation (78) or the plurality of elevations (78) is or are arranged spaced apart from at least one of the edges of the bridging element (76).

15. The pipe coupling according to one of claims 9 to 14, **characterized in that** the at least one elevation (78) or the plurality of elevations (78) are configured as a bead, the bead back whereof is spaced apart from the inside of the bridging element (76) and faces the interior of the pipe coupling (51).

## Revendications

1. Accouplement de tube pour assembler deux extrémités de tube comprenant une bande de collier (12 ; 52), qui comporte une fente oblongue (31) avec un premier côté de fente oblongue (32) et un deuxième côté de fente oblongue (33) éloigné de celui-ci et un mécanisme de serrage (21) pour réduire le diamètre intérieur de la bande de collier (12) ainsi qu'un élément de pontage (36 ; 76) pour raccorder la fente oblongue (31) qui est prévue sur la face intérieure de la bande de collier (12 ; 52) et s'étend du premier côté de fente oblongue (32) en direction du deuxième côté de fente oblongue (33) sur une section cintrée, la longueur de la section cintrée étant plus petite que la circonférence intérieure de la bande de collier (12 ; 52), **caractérisé en ce que** l'élément de pontage (36 ; 76) sur la bande de collier (12 ; 52) et au moins un élément entretoise (41 ; 81) passant dans une section cintrée sont fixés sur la face intérieure de la bande de collier (12), le bord (42 ; 82) de l'élément entretoise (41 ; 81) tourné vers le deuxième côté de la fente oblongue (33) étant disposé à une distance de ce deuxième côté de fente oblongue (33) et ce bord (42 ; 82) de l'élément entretoise (41 ; 81) formant une butée pour une extrémité libre (37 ; 77) de l'élément de pontage (36 ; 76).

2. Accouplement de tube selon la revendication 1, **caractérisé en ce qu'**au moins un élément entretoise (41 ; 81) est fabriqué à partir d'un matériau rigide.

3. Accouplement de tube selon la revendication 1 ou 2, **caractérisé en ce qu'**au moins un élément entretoise (41 ; 81) s'étend sur toute la largeur de la bande de collier (12 ; 52).

4. Accouplement de tube selon l'une quelconque des revendications 1 à 3, **caractérisé en ce qu'**au moins un élément entretoise (41 ; 81) comporte une épaisseur (D), qui correspond à l'épaisseur (C) de l'élément de pontage (36 ; 76) ou est différente de l'épaisseur de l'élément de pontage, l'épaisseur (D) de l'élément entretoise (41 ; 81) correspondant de préférence au moins à l'épaisseur (C) de l'élément de pontage (36 ; 76).

5. Accouplement de tube selon l'une quelconque des revendications 1 à 4, **caractérisé en ce que** la distance entre les bords (42 ; 82) d'au moins un élément entretoise (41 ; 81) tournés vers le deuxième côté de la fente oblongue (33) s'étend sur une zone angulaire (α) de 20° à 40°, de préférence de 25° à 35°.

6. Accouplement de tube selon l'une quelconque des revendications 1 à 5, **caractérisé en ce qu'**au moins un élément entretoise (41 ; 81) est fixé par conformité de forme à la face intérieure de la bande de collier (12 ; 52).

7. Accouplement de tube selon l'une quelconque des revendications 1 à 6, **caractérisé en ce que** l'élément entretoise (81) comporte sur son deuxième bord (82) tourné vers le deuxième côté de la fente oblongue, un évidement (83) pour recevoir l'extrémité libre (77) de l'élément de pontage (76).

8. Accouplement de tube selon l'une quelconque des revendications 1 à 7, **caractérisé en ce qu'**une zone de transition est constituée à l'extrémité libre (77) de l'élément de pontage (76) diminuant vers cette extrémité libre (77).

9. Accouplement de tube selon l'une quelconque des revendications 1 à 8, **caractérisé en ce qu'**au moins une surélévation (78) est prévue sur la face intérieure de l'élément de pontage (76).

10. Accouplement de tube selon la revendication 9, **caractérisé en ce que** plusieurs surélévations (78) sont prévues sur la face intérieure de l'élément de pontage (76).

11. Accouplement de tube selon la revendication 9 ou 10, **caractérisé en ce qu'**au moins une surélévation (78) ou plusieurs surélévations (78) passent le long de la section cintrée.

12. Accouplement de tube selon la revendication 11, **caractérisé en ce qu'**au moins une surélévation (78) ou plusieurs surélévations (78) comportent respectivement une extension en direction de la section cintrée de l'élément de pontage (76), qui est supérieure à 50 % de l'extension en direction de la section cintrée de l'élément de pontage (76).

13. Accouplement de tube selon l'une quelconque des revendications 10 à 12, **caractérisé en ce que** plusieurs surélévations (78) passent parallèlement l'une par rapport à l'autre.

14. Accouplement de tube selon l'une quelconque des revendications 9 à 13, **caractérisé en ce qu'**au moins une surélévation (78) ou plusieurs surélévations (78) est ou sont disposée(s) à distance d'au moins un des bords de l'élément de pontage (76).

15. Accouplement de tube selon l'une quelconque des revendications 9 à 14, **caractérisé en ce qu'**au moins une surélévation (78) ou plusieurs surélévations (78) sont constituées en forme de nervure, dont l'arrière de nervure est à distance de la face intérieure de l'élément de pontage (76) et tourné vers l'espace intérieur de l'accouplement de tube (51).
